# NEUE EUROPÄISCHE PATENTSCHRIFT

(11) **EP 2 701 361 B2**
(45) Veröffentlichungstag und Bekanntmachung des Hinweises auf die Entscheidung über den Einspruch: **04.08.2021**
(45) Hinweis auf die Patenterteilung: 14.11.2018
(21) Anmeldenummer: 13179611.2
(22) Anmeldetag: 07.08.2013
(51) Int. Cl.: H04L 29/06, H04L 29/08

(54) **HAUSGERÄT MIT KOMMUNIKATIONSMODUL**
Communication module for a domestic appliance
Module de communication pour un appareil ménager

(30) Priorität: 21.08.2012 DE 102012214795
(43) Veröffentlichungstag der Anmeldung: 26.02.2014
(73) Patentinhaber: BSH Hausgeräte GmbH, 81739 München (DE)
(72) Erfinder: Gaugler, Johannes, 93073 Neutraubling (DE); Kolbe, Andreas, 12683 Berlin (DE); Leitl-Nobel, Martin, 86465 Welden (DE); Ranck, Sharon, 89407 Dillingen (DE); Sippel, Matthias, 83329 Waging am See (DE)

(56) Entgegenhaltungen:
- EP-A1- 2 413 536
- WO-A1-02/100081
- WO-A1-2011/103680
- WO-A1-2013/103922
- DE-A1-102009 000 666
- DE-A1-102009 026 752
- US-A1- 2008 188 963

## Beschreibung

Die vorliegende Erfindung betrifft ein Hausgerät mit einem Kommunikationsmodul.

Damit ein Hausgerät kommunizieren kann, kann dieses mit einer Kommunikationselektronik verbunden sein, die die Verbindung zu einem Kommunikationspartner herstellt und die Kommunikation zu diesem Kommunikationspartner sicherstellt. Diese Kommunikationselektronik ist in die Hausgeräteelektronik intergiert, so dass lediglich eine unflexible Anschlussmöglichkeit gegeben ist.

Die DE 10 2009 026 753 752 A1 offenbart ein Haushaltsgerät mit einer Steuereinheit und einer Datenaustauscheinheit zum Datenaustausch zwischen dem Haushaltsgerät und einer externen Kommunikationsstelle. Die Datenaustauscheinheit umfasst einen Bluetooth Transceiver für eine Kommunikation mit der Steuereinheit.

Die WO 02/100081 A1 offenbart ein System zur Fernkommunikation mit Haushaltsgeräten. Das Haushaltsgerät umfasst eine Geräteschnittstelle, mittels der das Haushaltsgerät über ein Anpassungsnetzwerk mit einem Kommunikationsnetz zu kommunizieren vermag.

Die EP 2 413 536 A1 offenbart ein Haushaltsgerät mit einem Kommunikationsmodul, über das das Haushaltsgerät drahtlos mit einem Kommunikationsnetz verbunden werden kann, und die WO 2011/103680 A1 offenbart ein Haushaltsgerät und ein für eine Kommunikation mit dem Internet ausgebildetes tragbares Gerät, mittels dem eine Software für das Haushaltsgerät vom Internet herunter ladbar ist.

Die US 2008/0188963 A1 offenbart ein Haushaltsgerät, welches mehrere interne Komponenten aufweist, die über ein internes Netzwerk miteinander verbunden sind. Ferner kann das interne Netzwerk über eine Netzwerkkarte mit einem externen Netzwerk verbunden sein. Die Komponenten können auf jeweiligen Leiterplatten angeordnet sein.

Die Aufgabe der Erfindung ist die Ausgestaltung eines störungsfreieren Aufbaus eines Hausgerätes, das einen internen Kommunikationspartner und ein innerhalb des Hausgerätes angeordnetes Kommunikationsmodul umfasst.

Die Aufgabe der Erfindung wird gelöst durch ein Hausgerät gemäß dem Anspruch 1.

Der externe Kommunikationspartner ist beispielsweise ein Computer, ein Server oder ein Smartphone. Der interne Kommunikationspartner ist beispielsweise eine Hausgeräteelektronik. Dadurch wird beispielsweise der technische Vorteil erreicht, dass das Kommunikationsmodul in unterschiedlicher Art und Weise an das Hausgerät angebunden werden kann. Das Kommunikationsmodul stellt eine Kommunikationsverbindung zwischen dem Hausgerät und dem externen Kommunikationspartner dar. Das Kommunikationsmodul kann flexibel in unterschiedlichen Hausgerätetypen eingesetzt werden.

Unter einem Hausgerät wird ein Gerät verstanden, das zur Haushaltsführung eingesetzt wird. Derartige Geräte sind auch unter dem Begriff "Weiße Ware" bekannt. Das Hausgerät kann ein Haushaltsgroßgerät sein, wie beispielsweise eine Waschmaschine, ein Wäschetrockner, eine Geschirrspülmaschine, ein Gargerät, eine Dunstabzugshaube oder ein Kältegerät, wie beispielsweise ein Kühlschrank, ein Gefrierschrank oder eine Kühlgefrierkombination. Das Hausgerät kann aber auch ein Haushaltskleingerät sein, wie beispielsweise ein Warmwasserbereiter, ein Kaffeevollautomat, eine Küchenmaschine oder ein Staubsauger.

Erfindungsgemäß umfasst das Kommunikationsmodul ein Gehäuse zum Schutz des Kommunikationsmoduls. Dadurch wird beispielsweise der technische Vorteil erreicht, dass eine mechanische Beschädigung des Kommunikationsmoduls verhindert wird.

Die interne Kommunikationsschnittstelle ist eine leitungsgebundene Kommunikationsschnittstelle. Dadurch wird beispielsweise der technische Vorteil erreicht, dass eine störungsfreie Kommunikation über die leitungsgebundene Kommunikationsschnittstelle sichergestellt werden kann.

In einer weiteren vorteilhaften Ausführungsform des Hausgeräts umfasst das Kommunikationsmodul einen Steckverbinder zum elektrischen Verbinden der internen Kommunikationsschnittstelle mit dem internen Kommunikationspartner. Dadurch wird beispielsweise der technische Vorteil erreicht, dass das Kommunikationsmodul auf einfache Weise flexibel mit unterschiedlichen internen Kommunikationspartnern verbunden werden kann.

In einer weiteren vorteilhaften Ausführungsform des Hausgeräts umfasst das Kommunikationsmodul einen Steckverbinder zum elektrischen Verbinden der externen Kommunikationsschnittstelle mit dem externen Kommunikationspartner. Dadurch wird beispielsweise der technische Vorteil erreicht, dass eine sichere Verbindung mit dem externen Kommunikationspartner hergestellt werden kann.

In einer weiteren vorteilhaften Ausführungsform des Hausgeräts ist die externe Kommunikationsschnittstelle eine drahtlose Kommunikationsschnittstelle. Dadurch wird beispielsweise der technische Vorteil erreicht, dass auf einen leitungsgebundenen Anschluss der externen Kommunikationsschnittstelle verzichtet werden kann.

In einer weiteren vorteilhaften Ausführungsform des Hausgeräts ist die externe Kommunikationsschnittstelle eine Infrarot-Schnittstelle. Dadurch wird beispielsweise der technische Vorteil erreicht, dass eine externe Kommunikation erreicht wird, die keine Mikrowellenstrahlen verwendet.

In einer weiteren vorteilhaften Ausführungsform des Hausgeräts ist die externe Kommunikationsschnittstelle eine WLAN-Schnittstelle. Dadurch wird beispielsweise der technische Vorteil erreicht, dass eine externe Kommunikation schnell und einfach über ein eingerichtetes WLAN-Netzwerk erfolgen kann.

In einer weiteren vorteilhaften Ausführungsform des Hausgeräts ist die externe Kommunikationsschnittstelle eine GSM-Schnittstelle, eine UMTS-Schnittstelle oder eine HSPA-Schnittstelle. Dadurch wird beispielsweise der technische Vorteil erreicht, dass auch ohne eine Internetverfügbarkeit in direkter Nähe zum Hausgerät eine externe Kommunikation über das Mobilfunknetz stattfinden kann.

Der interne Kommunikationspartner ist eine Hausgeräteelektronik zur Leistungsversorgung des Hausgerätes. Dadurch wird beispielsweise der technische Vorteil erreicht, dass ein externer Kommunikationspartner eine Leistungsversorgung überwachen kann.

Das Hausgerät umfasst eine erste Leiterplatte, auf der das Kommunikationsmodul angeordnet ist und eine zweite Leiterplatte, auf der der interne Kommunikationspartner angeordnet ist. Dadurch wird beispielsweise der technische Vorteil erreicht, dass sich die Flexibilität des Kommunikationsmoduls erhöht und diese unabhängig und separat von dem internen Kommunikationspartner eingesetzt werden kann.

In einer weiteren vorteilhaften Ausführungsform des Hausgerätes umfasst das Hausgerät ein Kabel zum elektrischen Verbinden der internen Kommunikationsschnittstelle mit dem internen Kommunikationspartner. Dadurch wird beispielsweise der technische Vorteil erreicht, dass das Kommunikationsmodul an einem anderen Ort als der interne Kommunikationspartner angeordnet sein kann.

Ausführungsbeispiele der Erfindung sind in den Zeichnungen dargestellt und werden im Folgenden näher beschrieben.

Es zeigen:
- Fig. 1: eine schematische Ansicht einer Hausgeräteanordnung;
- Fig. 2: eine schematische Ansicht einer Ausführungsform einer Hausgeräteanordnung; und
- Fig. 3: eine schematische Ansicht einer Hausgeräteanordnung.

Im Folgenden sind drei Hausgeräteanordnungen mit unterschiedlichen Anschluss- und Platzierungsmöglichkeiten eines separaten Kommunikationsmoduls beschrieben.

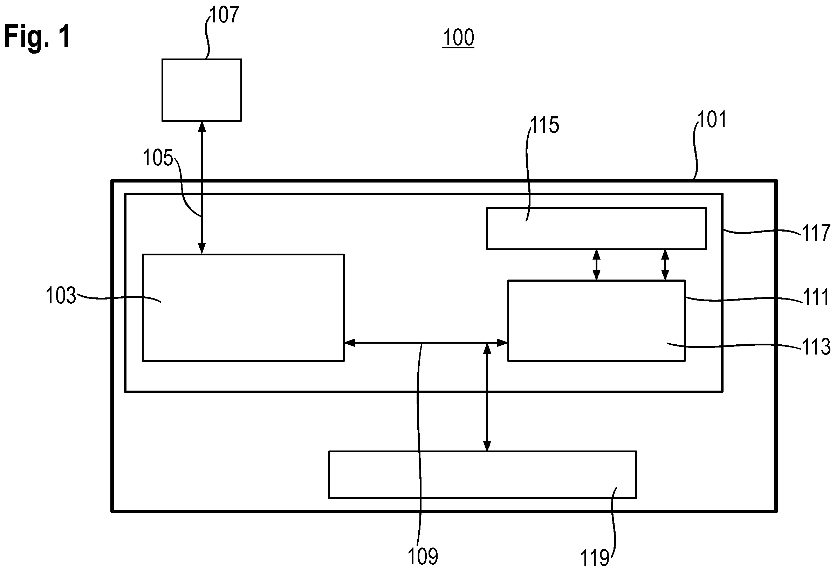

Fig. 1 zeigt eine schematische Ansicht der Hausgeräteanordnung 100, bei der ein Kommunikationsmodul 103 auf einer gemeinsamen Leiterplatte 117 für eine Hausgeräteelektronik 113 im Inneren eines Hausgerätes 101 angeordnet ist.

Das Kommunikationsmodul 103 umfasst eine externe Kommunikationsschnittstelle 105 zur Kommunikation über ein externes Kommunikationsprotokoll mit einem externen Kommunikationspartner 107 außerhalb des Hausgerätes 101 und eine interne Kommunikationsschnittstelle 109 zur Kommunikation über ein internes Kommunikationsprotokoll mit einem internen Kommunikationspartner 111 innerhalb des Hausgerätes 101.

Das Kommunikationsmodul 103 umfasst eine Kommunikationselektronik, die dazu dient, Daten zwischen dem externen Kommunikationspartner 107 und dem internen Kommunikationspartner 111 zu übermitteln. Das Kommunikationsmodul 103 kann beispielsweise durch einen elektronischen Chip gebildet sein, der auf die Leiterplatte 117 aufgesteckt oder aufgelötet wird. Das Kommunikationsmodul 103, das die Kommunikation zwischen dem Hausgerät 101 und dem externen Kommunikationspartner 107 sicherstellt, ist eine separate Kommunikationselektronik.

Die Leiterplatte 117 für die Hausgeräteelektronik 113 ist eine in dem Hausgerät 101 ohnehin vorhandene Leiterplatte und kann beispielsweise eine Bedienelektronik, eine Steuerelektronik oder eine Leistungselektronik des Hausgerätes 101 umfassen. Die Hausgeräteelektronik 113 dient beispielsweise zum Steuern des Hausgerätes 101 oder zur Energieversorgung des Hausgerätes 101.

Das Kommunikationsmodul 103 ist mit der Hausgeräteelektronik 113 beispielsweise mittels Leiterbahnen auf der Leiterplatte 117 verbunden. Daneben können weitere Leiterplatten 119 für die Hausgeräteelektronik vorgesehen sein. Die Hausgerätelektronik 113 steuert beispielsweise die Schalter, Anzeigen oder Lautsprecher 115 des Hausgerätes 101.

Dadurch lassen sich für das Kommunikationsmodul 103 unterschiedliche Anschluss- und Platzierungsanforderungen realisieren. Außerdem kann das Kommunikationsmodul 103 in unterschiedlichen Hausgerätetypen eingesetzt werden, wie beispielsweise einem Spüler, einer Waschmaschine oder einem Kühlschrank.

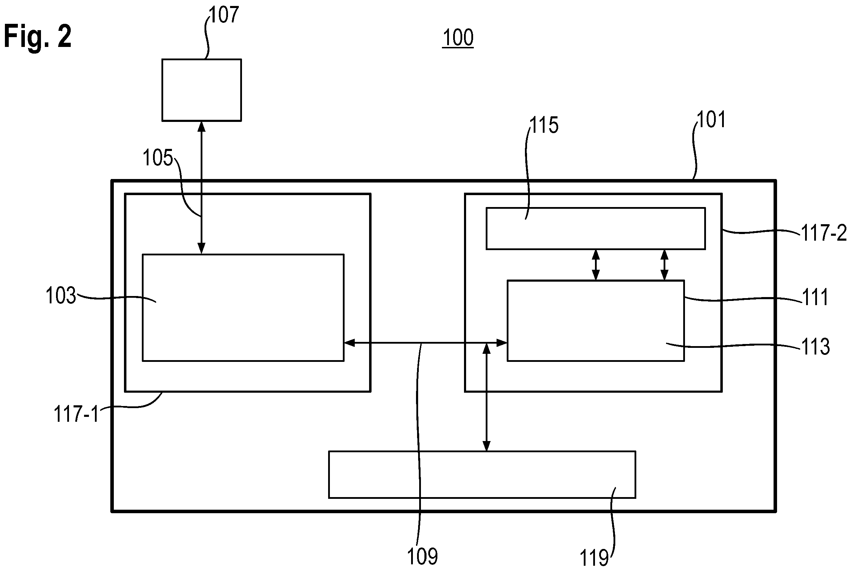

Fig. 2 zeigt eine schematische Ansicht einer Ausführungsform der Hausgeräteanordnung 100, bei der das Kommunikationsmodul 103 als separate Einheit im Inneren des Hausgerätes 101 angeordnet ist. Das Kommunikationsmodul 103 befindet sich auf einer ersten Leiterplatte 117-1 und die Hausgeräteelektronik 113 befindet sich auf einer zweiten Leiterplatte 117-2.

Das Kommunikationsmodul 103 kann an einer geeigneten Stelle innerhalb des Hausgerätes 101 angeordnet sein. Das Kommunikationsmodul 103 ist mit der Hausgeräteelektronik 113 beispielsweise mittels einer Verdrahtung oder Verkabelung innerhalb des Hausgerätes 101 verbunden und weist eine leitungsgebundene interne Kommunikationsschnittstelle 109 auf. Zum elektrischen Verbinden des Kommunikationsmoduls 103 mit der Hausgeräteelektronik 113 können ein oder mehrere Steckverbinder vorgesehen sein. Ein Steckverbinder kann beispielsweise auf einer Leiterplatte 117-1 des Kommunikationsmoduls 103 vorgesehen sein. Ein weiterer Steckverbinder kann beispielsweise auf der Leiterplatte 117-2 der Hausgerätelektronik 113 vorgesehen sein. In die Steckverbinder kann ein Kabel mit entsprechenden Steckverbindern eingesteckt werden.

Zusätzlich kann das Kommunikationsmodul 103 einen Steckverbinder zum elektrischen Verbinden der externen Kommunikationsschnittstelle 105 mit dem externen Kommunikationspartner 107 umfassen. Die externe Kommunikationsschnittstelle 105 kann jedoch auch eine drahtlose Kommunikationsschnittstelle sein. Das Kommunikationsmodul 103 kann jedoch ebenfalls eine Infrarot-Schnittstelle, eine WLAN-Schnittstelle, eine GSM-Schnittstelle, eine UMTS-Schnittstelle oder eine HSPA-Schnittstelle als externe Kommunikationsschnittstelle 105 umfassen.

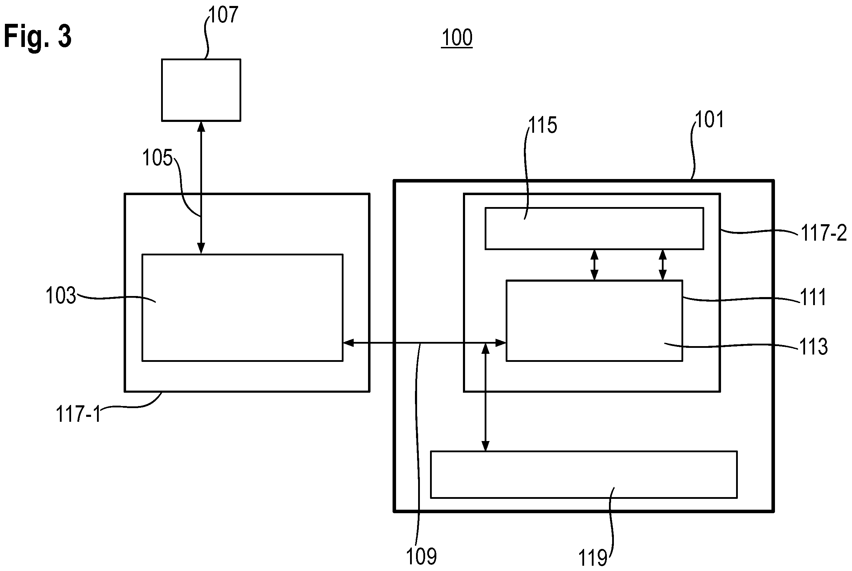

Fig. 3 zeigt eine schematische Ansicht der Hausgeräteanordnung 100, bei der das Kommunikationsmodul 103 als separate Einheit außerhalb des Hausgerätes 101 angeordnet ist.

Das Kommunikationsmodul 103 kann beispielsweise in einem separaten Kommunikationsmodulgehäuse an einer geeigneten Stelle außerhalb des Hausgerätes 101 angeordnet werden. Das Kommunikationsmodulgehäuse dient zum Schutz des Kommunikationsmoduls 103 vor einer Beschädigung und ist beispielsweise aus Kunststoff hergestellt. Das Kommunikationsmodul 103 ist beispielsweise mit der Hausgeräteelektronik 113 mittels Verkabelung verbunden.

Durch die Verwendung des Kommunikationsmoduls 103 mit der internen und der externen Kommunikationsschnittstelle 105 und 109 in Verbindung mit dem Hausgerät 101 ist es möglich, eine Kommunikationselektronik in unterschiedlicher Art und Weise an das Hausgerät 101 anzubinden. Das Kommunikationsmodul 103 stellt die Verbindung zwischen dem Hausgerät 101 und dem externen Kommunikationspartner 107 her. Das Kommunikationsmodul 103 kann in unterschiedlichen Hausgerätetypen eingesetzt werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

## Patentansprüche

1. Hausgerät (101), nämlich Waschmaschine, Wäschetrockner, Geschirrspülmaschine, Gargerät, Dunstabzugshaube, Kältegerät, wie beispielsweise Kühlschrank, Gefrierschrank oder Kühlgefrierkombination, Haushaltskleingerät, in Form eines Warmwasserbereiters, eines Kaffeevollautomaten, einer Küchenmaschine oder eines Staubsaugers aufweisend einen internen Kommunikationspartner (111) und ein innerhalb des Hausgeräts (101) angeordnetes Kommunikationsmodul (103), welches eine externe Kommunikationsschnittstelle (105) zur Kommunikation mit einem externen Kommunikationspartner (107) außerhalb des Hausgerätes (101) aufweist, wobei das Kommunikationsmodul (103) auf einer ersten Leiterplatte (117-1) angeordnet ist, **dadurch gekennzeichnet, dass** der interne Kommunikationspartner (111) auf einer zweiten Leiterplatte (117-2) angeordnet ist, und das Kommunikationsmodul (109) eine leitungsgebundene interne Kommunikationsschnittstelle (109) zur Kommunikation mit dem internen Kommunikationspartner (111) innerhalb des Hausgerätes (101) umfasst, wobei der interne Kommunikationspartner (111) eine Hausgeräteelektronik (113) zur Leistungsversorgung des Hausgerätes (101) ist, und wobei das Kommunikationsmodul (103) ein Gehäuse zum Schutz des Kommunikationsmoduls (103) umfasst.

2. Hausgerät (101) nach einem der Ansprüche 1 oder 2, **dadurch gekennzeichnet, dass** das Hausgerät (101) ein Kabel zum elektrischen Verbinden der internen Kommunikationsschnittstelle (109) mit dem internen Kommunikationspartner (111) umfasst.

3. Hausgerät (101) nach einem der vorangehenden Ansprüche, **dadurch gekennzeichnet, dass** das Kommunikationsmodul (103) einen Steckverbinder zum elektrischen Verbinden der internen Kommunikationsschnittstelle (109) mit dem internen Kommunikationspartner (111) umfasst.

4. Hausgerät (101) nach einem der vorangehenden Ansprüche, **dadurch gekennzeichnet, dass** das Kommunikationsmodul (103) einen Steckverbinder zum elektrischen Verbinden der externen Kommunikationsschnittstelle (105) mit dem externen Kommunikationspartner (107) umfasst.

5. Hausgerät (101) nach einem der Ansprüche 1 bis 3, **dadurch gekennzeichnet, dass** die externe Kommunikationsschnittstelle (105) eine drahtlose Kommunikationsschnittstelle ist.

6. Hausgerät (101) nach Anspruch 5, **dadurch gekennzeichnet, dass** die externe Kommunikationsschnittstelle (105) eine Infrarot-Schnittstelle ist.

7. Hausgerät (101) nach Anspruch 5, **dadurch gekennzeichnet, dass** die externe Kommunikationsschnittstelle (105) eine WLAN-Schnittstelle ist.

8. Hausgerät (101) nach Anspruch 5, **dadurch gekennzeichnet, dass** die externe Kommunikationsschnittstelle (105) eine GSM-Schnittstelle, eine UMTS-Schnittstelle oder eine HSPA-Schnittstelle ist.

## Claims

1. Household appliance (101), namely washing machine, tumble dryer, dishwasher, cooking appliance, extractor hood, refrigeration appliance, for example refrigerator, freezer or combined fridge-freezer, small household appliance in the form of a warm water dispenser, a fully automatic coffee machine, a food processor or a vacuum cleaner, having an internal communications partner (111) and a communications module (103) arranged within the household appliance (101), which has an external communications interface (105) for communicating with an external communications partner (107) outside the domestic appliance (101), wherein the communications module (103) is arranged on a first circuit board (117-1), **characterised in that** the internal communications partner (111) is arranged on a second circuit board (117-2), and the communications module (109) comprises a wired internal communications interface (109) for communicating with the internal communications partner (111) within the household appliance (101), wherein the internal communications partner (111) is a household electrics assembly (113) for supplying power to the household appliance (101), and wherein the communications module (103) comprises a housing for protecting the communications module (103).

2. Household appliance (101) according to one of claims 1 or 2, **characterised in that** the household appliance (101) comprises a cable for electrically connecting the internal communications interface (109) to the internal communications partner (111).

3. Household appliance (101) according to one of the preceding claims, **characterised in that** the communications module (103) comprises a plug connector for electrically connecting the internal communications interface (109) to the internal communications partner (111).

4. Household appliance (101) according to one of the preceding claims, **characterised in that** the communications module (103) comprises a plug connector for electrically connecting the external communications interface (105) to the external communications partner (107).

5. Household appliance (101) according to one of claims 1 to 3, **characterised in that** the external communications interface (105) is a wireless communications interface.

6. Household appliance (101) according to claim 5, **characterised in that** the external communications interface (105) is an infrared interface.

7. Household appliance (101) according to claim 5, **characterised in that** the external communications interface (105) is a WLAN interface.

8. Household appliance (101) according to claim 5, **characterised in that** the external communications interface (105) is a GSM interface, a UMTS interface or a HSPA interface.

## Revendications

1. Appareil électroménager (101), à savoir lave-linge, sèche-linge, lave-vaisselle, appareil de cuisson, hotte aspirante, appareil de réfrigération, tel que par exemple réfrigérateur, congélateur ou combiné réfrigérateur-congélateur, petit appareil ménager, sous forme d'un chauffe-eau, d'une cafetière automatique, d'un robot ménager ou d'un aspirateur présentant un partenaire de communication (111) interne et un module de communication (103) agencé à l'intérieur de l'appareil électroménager (101), lequel module possède une interface de communication (105) externe destinée à la communication avec un partenaire de communication externe (107) à l'extérieur de l'appareil électroménager (101), le module de communication (103) étant disposé sur une carte de circuits imprimés (117-1), **caractérisé en ce que** le partenaire interne de communication (111) est agencé sur une deuxième carte de circuits imprimés (117-2), et le module de communication (109) comprend une interface de communication (109) interne alimentée destinée à la communication avec le partenaire de communication interne (111) à l'intérieur de l'appareil électroménager (101),
le partenaire interne de communication (111) étant un équipement électronique pour appareils ménagers (113) destiné à l'alimentation en puissance de l'appareil ménager (101), et le module de communication (103) comprenant un coffret destiné à la protection du module de communication (103).

2. Appareil électroménager (101) selon la revendication 1, **caractérisé en ce que** l'appareil électroménager (101) comprend un câble pour le raccordement électrique de l'interface interne de communication (109) avec le partenaire interne de communication (111).

3. Appareil électroménager (101) selon l'une des revendications précédentes, **caractérisé en ce que** le module de communication (103) comprend un connecteur mâle-femelle pour le raccordement électrique de l'interface interne de communication (109) avec le partenaire interne de communication (111).

4. Appareil électroménager (101) selon l'une des revendications précédentes, **caractérisé en ce que** le module de communication (103) comprend un connecteur mâle-femelle pour le raccordement électrique de l'interface externe de communication (105) avec le partenaire externe de communication (107).

5. Appareil électroménager (101) selon l'une des revendications 1 à 3, **caractérisé en ce que** l'interface externe de communication (105) est une interface de communication sans fil.

6. Appareil électroménager (101) selon la revendication 5, **caractérisé en ce que** l'interface externe de communication (105) est une interface infrarouge.

7. Appareil électroménager (101) selon la revendication 5, **caractérisé en ce que** l'interface externe de communication (105) est une interface WLAN.

8. Appareil électroménager (101) selon la revendication 5, **caractérisé en ce que** l'interface externe de communication (105) est une interface GSM, une interface UMTS ou une interface HSPA.
